# EUROPEAN PATENT SPECIFICATION

(11) **EP 0 985 351 B1**
(45) Date of publication and mention of the grant of the patent: **19.05.2004**
(21) Application number: 99202677.3
(22) Date of filing: 18.08.1999
(51) Int. Cl.: A23G 9/02, A23G 3/00, A63H 27/14

(54) **Frozen dessert article**
Gefrorener Dessertartikel
Article de dessert glacé

(30) Priority: 28.08.1998 ES 9802224 U
(43) Date of publication of application: 15.03.2000
(73) Proprietor: SOCIETE DES PRODUITS NESTLE S.A., 1800 Vevey (CH)
(72) Inventor: Bueno Ceresuela, Jorge, 08027 Barcelona (ES)
(74) Representative: Archambault, Jean

(56) References cited:
- WO-A-98/53892
- US-A- 3 229 413
- US-A- 5 676 988

## Description

### SUBJECT OF THE INVENTION

The subject of the present invention is an improved frozen dessert novelty which incorporates significant innovations and advantages in comparison with existing frozen desserts.

More specifically, the invention relates to a stick, for supporting an iced lolly, whose principal characteristic is that it enables the user to rotate, as desired, the frozen substance placed at the top of the stick.

### BACKGROUND OF THE INVENTION

A wide variety of articles, supported by a wooden or plastic holder-stick of various types for consumption by the user is currently available on the market. When consuming the frozen dessert in a constant and regular manner, the user has to rotate the frozen dessert by hand in order to gain access all around it, with the consequent inconvenience and risk that the frozen dessert may be dropped or stain clothing. Later, when the frozen dessert has been consumed, the frozen dessert's stick remains and this is generally discarded because it is of no use. In the following specification, the term "frozen dessert" is intended for ice-cream, water ice, sherbet, sorbet with or without core and/or coating and/or inclusions.

### DESCRIPTION OF THE INVENTION

The improved frozen dessert article which is the subject of the present registration as defined in claim 1, is characterized in that it comprises a holder-stick, for supporting the mass of the frozen dessert, composed of a lower handle intended as a holder, an intermediate pinion inside a box and an upper extension of the stick intended to support the mass of frozen dessert and whose upper-stick extension is integral with the intermediate pinion and rotates freely with respect to the said lower holder-stick.

The mass of frozen dessert is rotated by inserting a slender rack between the pinion and the inner face of the box in such a way that it meshes with the pinion, its transverse movement giving rise to a rotation of the pinion and, consequently of the frozen dessert located on the upper stick.

In this way, the user rotates the frozen dessert as desired, facilitating the latter's consumption by its being rotated inside the mouth.

Provision has been made for the stick to have a subsequent practical use, which consists in attaching to its rotary-stick extension gadgets/toys such as, for example, whisking blades, rotating or flying objects, spinning tops and similar toys, which give the stick a play and recreational use after it has been used as a frozen dessert support.

To supplement the description which will be given below and with the aim of promoting a better understanding of its characteristics, the present specification is accompanied by a set of drawings, in whose figures the most significant details of the invention are shown by way of illustration and in a non-limiting manner.

### BRIEF DESCRIPTION OF THE DRAWINGS

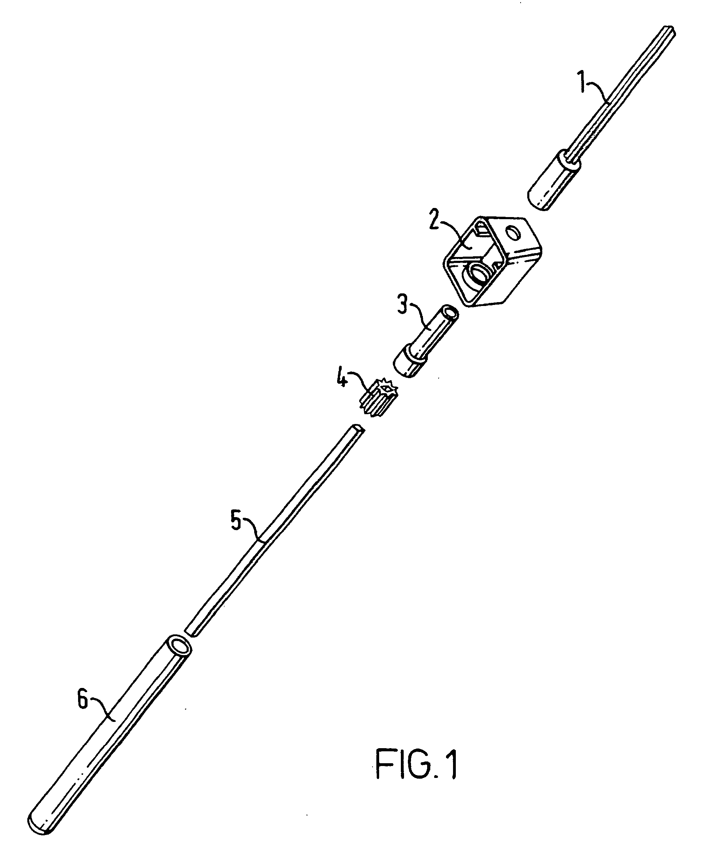

Figure 1 shows an exploded view of the frozen dessert-support stick.

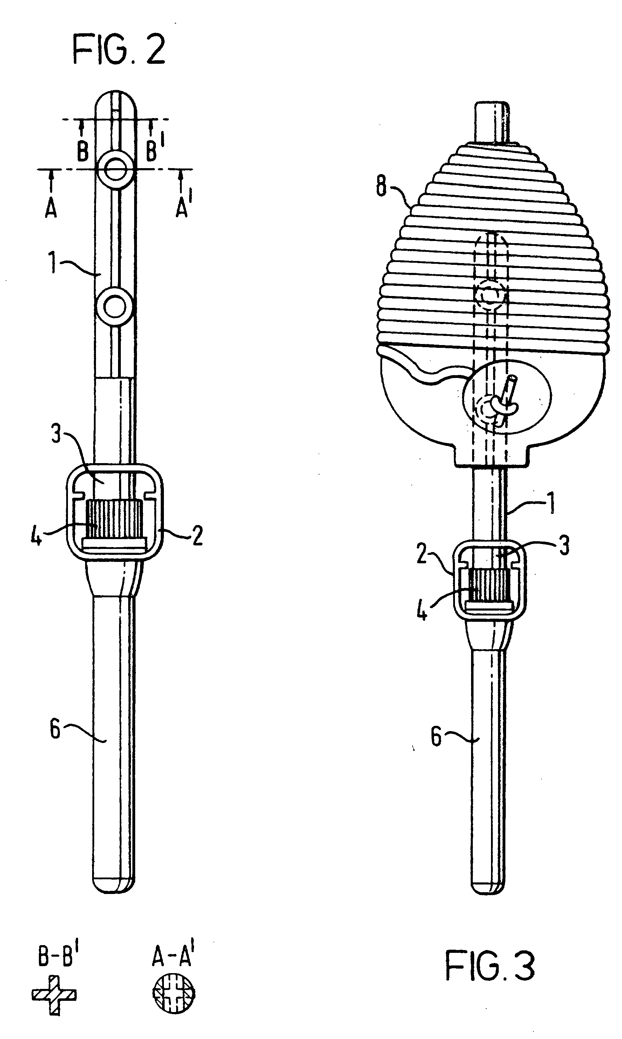

Figure 2 shows a view of the frozen dessert stick in elevation and details of two sections of the upper part in planes A-A and B-B.
Figure 3 shows a view of the stick in perspective, incorporating the frozen dessert.
Figure 4 shows a plan view of the rack strip.
Figure 5 shows a profile view of the rack strip and
Figure 6 shows a profile view of an alternative embodiment of the rack stick; and
Figure 7 shows a view of the stick in perspective, incorporating a flying toy.

### DESCRIPTION OF A PREFERRED EMBODIMENT

In the light of the figures commented upon and in accordance with the numbering adopted, it is possible to see in said figures a preferred, although non-limiting, embodiment of the invention which comprises a holder-handle (6), of cylindrical shape and with a hollow inside, which is open at the top end and which accommodates a rod (5) which rotates freely inside, projecting in a significant manner via the said upper opening. The said rod is substantially elongate and has a square or star-shaped cross section and, via its top end, is joined securely to the pinion (4) and to the support component (3) which holds the components (1), (2) and (4). The support component (3) and the pinion (4) are located inside the small box (2) and rotate freely with respect to the box but are both (3, 4) integral with the lower component (5), the support component (3) being assembled at the top with the frozen dessert-support component (1), trapping the upper face of the small box (2) between both of them. The pinion (4) is cylindrical in shape, with a toothed exterior suitable for meshing with the rack (7) and, inside, it has a hollow whose cross section has a square or star shape and it is suitable for being secured by coupling to the rod (5) and transmitting its rotary movement to it. The support component (3) has a cylindrical shape with a re-entrant step in its generatrix which defines a stop surface for preventing it from emerging via the top of the small box (2) and whose projecting upper end meshes with the lower part of the frozen dessert support (1). This frozen dessert support (1), of substantially elongate shape, has a hollow, cylindrical lower part suitable for integral assembly with the support component (3) and an axially elongate upper part with a rounded end, whose cross section has the shape of a star and which has a transverse hole at each of two points along its length, forming a suitable anchoring point for the mass of frozen dessert during the latter's consumption. The central small box (2) has a parallelepidal shape which is slightly elongate in the axial direction of the stick, with rounded corners and without two opposite lateral faces via which the rack is inserted and, inside, there are two lateral projections formed by a flat surface which is perpendicular to the axial axis of the stick and interrupted by the support component (3) and the pinion (4), forming the chamber in which the rack (7) is inserted, having, in the centre of the upper face, a hole through which the upper end of the said support component (3) passes and, in the lower face, another hole through which the rod (5) passes, the box (2) being secured to the holder-handle (6) via this lower face. The rack (7) consists of a substantially elongate, narrow and flattened strip of rectangular cross section which has a row of teeth on both surfaces (Fig.5) for engaging with the pinion (4) and, at one end, a circular holder end-piece.

The frozen dessert is rotated by moving the rack (7) inserted in the small box (2), which gives rise to a rotary movement of the components (1, 3, 4, 5), which are integral with the frozen dessert, with respect to the components (2, 6) which are stationary with respect to the user's hand.

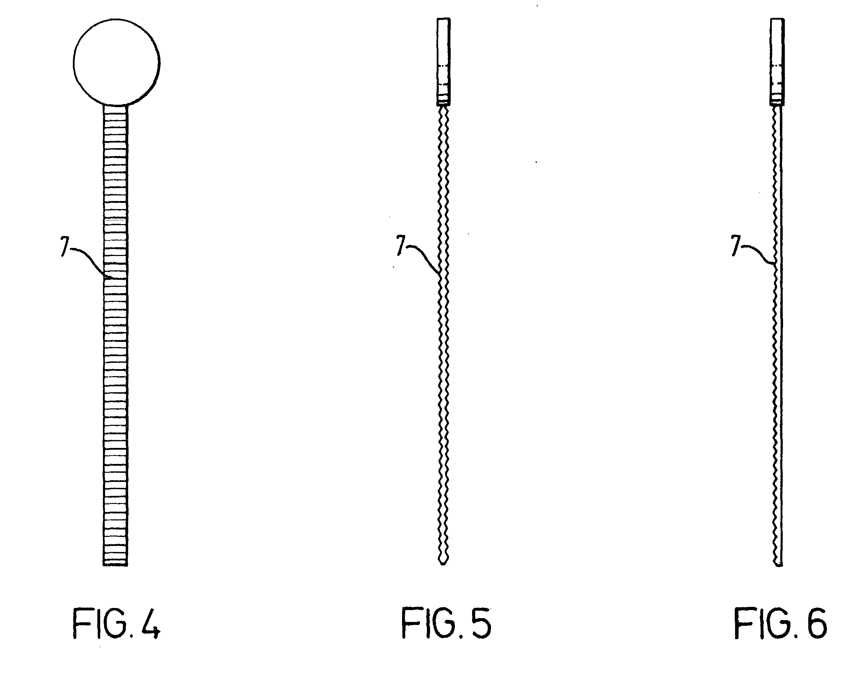

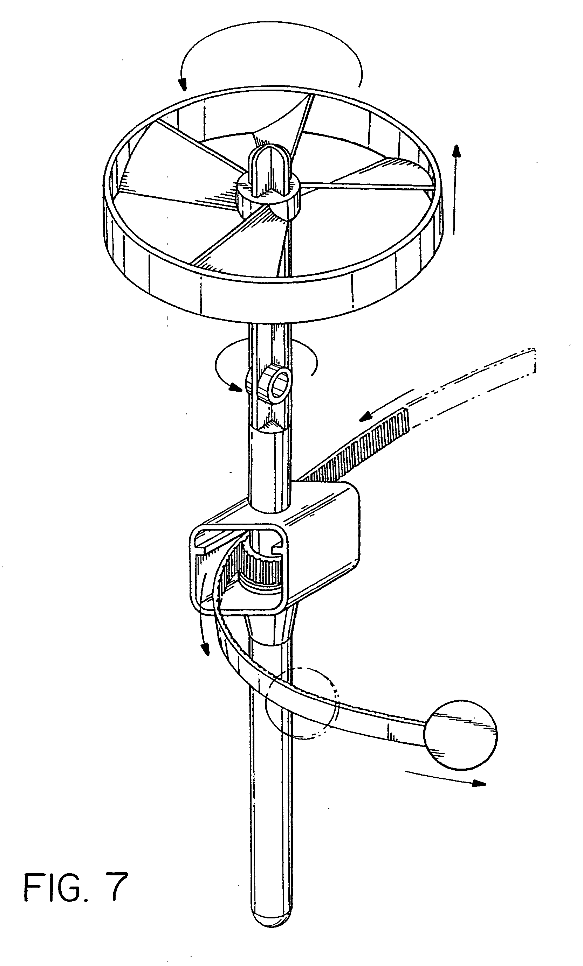

The top of the frozen dessert support component (1) has a shape which makes it suitable for the fitting of various accessories which convert the frozen dessert stick, after the frozen dessert has been consumed, into a number of toys such as a whisk, a spinning top and rotary and/or flying toys (Fig.7). In the embodiment of Fig. 6, the rack stick is also of rectangular cross section and has a flat external surface and a toothed internal surfac for engaging with the pinion (4). The flat external surface slides freely along the internal wall of the box (2).

## Claims

1. Frozen dessert novelty, of the type which comprises a stick which holds a mass of frozen dessert at one of its ends, **characterized in that** the stick is composed of two coaxial elements which can rotate with respect to each other and are actuated by a rack (7), the first element consisting of a holder-handle (6) of preferably hollow, cylindrical shape, with the upper end open, capable of receiving a rod (5) whose end is coupled to a support component (3) with the interposition of a pinion (4) integral with the said rod (5) and located in a small box (2) of parallelepidal shape, without two lateral faces and with coaxial holes in both the upper and lower face through which the rod (5) passes and the upper end of the component (3) emerges, said component (3) being suitable for receiving, by coupling, the frozen dessert-support element (1) which is formed by a rod of star-shaped cross section which has, at points spaced along its length, transverse holes which form an anchoring point for the mass of frozen dessert, the said pinion (4) being suitable for receiving the action of the rack (7) and giving rise to the rotation of the mass of frozen dessert (8).

2. Frozen dessert novelty according to Claim 1, **characterized in that** the rack strip (7) preferably consists of a substantially elongate, narrow and flattened strip which has a series of teeth on one or both of its two principal faces and, at one end, a holder of circular shape, whose rack is suitable for engaging with the pinion (4) when inserted in the small box (2).

3. Frozen dessert novelty according to Claim 1 or 2, **characterized in that**, once the frozen dessert has been consumed, provision has been made for the coupling to the rotary rod of the frozen dessert support of gadget/game accessories such as, for example, a whisk, a spinning top, or rotary and/or flying toys, thereby giving it a subsequent use as a play thing.

## Patentansprüche

1. Neuheit für ein gefrorenes Dessert von der Art, die einen Stiel umfaßt, der eine Masse aus gefrorenem Dessert an einem seiner Enden hält, **dadurch gekennzeichnet, daß** der Stiel aus zwei koaxialen Elementen zusammengesetzt ist, die sich gegeneinander drehen können und durch eine Zahnstange (7) betätigt werden, wobei das erste Element aus einem Haltegriff (6) einer vorzugsweisen hohlen, zylindrischen Form mit einem oberen offenen Ende besteht, das fähig ist, eine Stange (5) aufzunehmen, dessen Ende an eine Haltekomponente (3) gekuppelt ist, wobei ein Ritzel (4) dazwischen angeordnet ist, das integral mit der Stange (5) und in einen kleinen Kasten (2) mit Parallelepidform ohne zwei Seitenflächen und mit koaxialen Löchern in sowohl der oberen als auch unteren Fläche angeordnet ist, durch die die Stange (5) tritt, und das obere Ende der Komponente (3) herauskommt, wobei die Komponente (3) geeignet ist, durch Kuppeln das Halteelement (1) für das gefrorene Dessert aufzunehmen, das durch eine Stange eines sternförmigen Querschnitts ausgebildet ist, die an entlang seiner Länge beabstandeten Punkten Querlöcher aufweist, die einen Ankerpunkt für die Masse aus gefrorenem Dessert bilden, wobei das Ritzel (4) geeignet ist, die Aktion der Zahnstange (7) aufzunehmen und die Rotation der Masse aus gefrorenem Dessert (8) zu verursachen.

2. Neuheit für ein gefrorenes Dessert nach Anspruch 1, **dadurch gekennzeichnet, daß** der Zahnstangenstreifen (7) vorzugsweise aus einem im Wesentlichen länglichen schmalen und abgeflachten Streifen besteht, der eine Reihe von Zähnen an einer oder beiden seiner Hauptflächen, und an einem Ende einen Halter kreisförmiger Form aufweist, wobei die Zahnstange dafür geeignet ist, mit dem Ritzel (4) ineinanderzugreifen, wenn es in den kleinen Kasten (2) eingesetzt wird.

3. Neuheit für ein gefrorenes Dessert nach Anspruch 1 oder 2, **dadurch gekennzeichnet, daß**, sobald das gefrorene Dessert verbraucht wurde, eine Vorkehrung für das Ankuppeln von Geräte-/Spielaccessoires an die Drehstange des Halters für ein gefrorenes Dessert gemacht wurde, wie z.B. einen Schneebesen, ein Rotationsoberteil, oder Rotationsund/oder Flugspielzeuge, wodurch es ihm einen anschließenden Nutzen als ein Spielzeug verleiht.

## Revendications

1. Nouveau dessert glacé, du type qui comprend un bâtonnet qui tient une masse de dessert glacé à l'une de ses extrémités, **caractérisé en ce que** le bâtonnet est composé de deux éléments coaxiaux qui peuvent tourner l'un par rapport à l'autre et sont actionnés par une crémaillère (7), le premier élément consistant en un manche de support (6) de forme de préférence cylindrique, creuse, avec l'extrémité supérieure ouverte, adaptée à recevoir une tige (5) dont l'extrémité est accouplée avec un élément de support (3) alors qu'est intercalé un pignon (4) d'un seul tenant avec ladite tige (5) et situé dans un petit boîtier (2) de forme parallélépipédique, sans deux faces latérales et avec des trous coaxiaux dans la face supérieure et la face inférieure par lesquels la tige (5) passe et l'extrémité supérieure de l'élément (3) émerge, ledit élément (3) étant adapté à recevoir, par accouplement, l'élément formant support (1) de dessert glacé qui est formé par une tige à section transversale en forme d'étoile qui comporte, en des points espacés sur sa longueur, des trous traversants qui forment un point d'ancrage pour la masse de dessert glacé, ledit pignon (4) étant adapté à recevoir l'actionnement de la crémaillère (7) et provoquer la rotation de la masse de dessert glacé (8).

2. Nouveau dessert glacé selon la revendication 1, **caractérisé en ce que** la bande de crémaillère (7) consiste, de préférence, en une bande étroite et aplatie, sensiblement allongée, qui comporte une série de dents sur l'une de ses deux faces principales, ou sur les deux, et, à une extrémité, une pièce de préhension de forme circulaire, la crémaillère étant adaptée à un engagement avec le pignon (4) une fois insérée dans le petit boîtier (2).

3. Nouveau dessert glacé selon la revendication 1 ou 2, **caractérisé en ce que**, une fois le dessert glacé consommé, est prévu l'accouplement à la tige rotative du support de dessert glacé de gadgets ou d'accessoires de jeu tels que, par exemple, un batteur, une toupie, ou des jouets qui tournent et/ou volent, permettant une utilisation ultérieure comme jeu.
